# EUROPÄISCHE PATENTSCHRIFT

(11) **EP 1 881 881 B1**
(45) Veröffentlichungstag und Bekanntmachung des Hinweises auf die Patenterteilung: **03.12.2008**
(21) Anmeldenummer: 06705829.7
(22) Anmeldetag: 20.01.2006
(51) Int. Cl.: B23Q 1/54, B25J 17/02, B23K 26/00

(54) **BEWEGUNGS- UND/ODER POSITIONIERVORRICHTUNG MIT KARDANISCHER AUFHÄNGUNG**
MOVING AND/OR POSITIONING DEVICE WITH CARDANIC SUSPENSION
DISPOSITIF DE DEPLACEMENT ET/OU DE POSITIONNEMENT A SUSPENSION A CARDAN

(30) Priorität: 31.01.2005 DE 102005004522
(43) Veröffentlichungstag der Anmeldung: 30.01.2008
(73) Patentinhaber: Sitec Industrietechnologie GmbH, 09114 Chemnitz (DE)
(72) Erfinder: FISCHER, Dieter, 09244 Lichtenau (DE); SCHWAAR, Michael, 09232 Hartmannsdorf (DE); WOLF, Klaus-Peter, 09113 Chemnitz (DE); FÖRSTER, Harald, 09128 Chemnitz (DE)
(74) Vertreter: Findeisen, Andreas
(86) Internationale Anmeldenummer: PCT/DE2006/000091
(87) Internationale Veröffentlichungsnummer: WO 2006/079318

(56) Entgegenhaltungen:
- DE-A1- 10 252 443
- DE-C1- 10 153 854
- US-A- 2 286 571
- US-A1- 2004 054 438

## Beschreibung

Die Erfindung betrifft, eine Bewegungs- und/oder Positioniervorrichtung zum elektronisch gesteuerten, mehrachsigen Bewegen und/oder Positionieren eines Objektes mittels eines Objektträgers und Koppelgliedern, die in einem Gestell angeordnet sind, wobei jedes der Koppelglieder über eine Kardanische Aufhängung mit dem Gestell, in der das jeweilige Koppelglied verdrehbar gelagert ist, verbunden ist, und die Koppelglieder gegenüberliegend von der Kardanischen Aufhängung an einem Ende des Objektträgers mittels je einer Gelenkanordnung angelenkt sind. Eine solche Vorrichtung aus der DE-101 53 854-C bekannt.

Aus der DE 102 52 443 A1 ist eine Vorrichtung zum Ablenken eines Laserstrahls bekannt. Sie umfasst einen Ablenkspiegel, der in einer Halterung schwenkbar um eine in seiner Spiegelfläche liegende, erste Schwenkachse gelagert ist, und weist einen Drehantrieb zum Verschwenken der Halterung um eine rechtwinklig zur ersten Schwenkachse verlaufende zweite Schwenkachse mit einer am Ablenkspiegel angreifenden Einrichtung zum Verschwenken des Ablenkspiegeles um die erste Schwenkachse auf. Die Einrichtung verfügt über ein drehbar um die zweite Schwenkachse gelagertes Verbindungselement, über einen Hebel, der am Ablenkspiegel und am Verbindungselement um jeweils parallel zur ersten Schwenkachse verlaufende Achsen schwenkbar gelagert ist, und über ein längs der zweiten Schwenkachse verschiebbares Antriebselement. Die Halterung und das Verbindungselement sind längs der zweiten Schwenkachse relativ zueinander verschiebbar gelagert. Das Antriebselement ist mit der Halterung oder mit dem Verbindungselement bewegungsgekoppelt. Diese Anordnung mehrerer miteinander verbundener und aufeinander aufbauender Bewegungselemente weist eine geringe Dynamik bei der Bewegung und/oder Positionierung auf. Zudem werden eventuell auftretende Bewegungs- und/oder Positionierungsfehler durch die Koppelung aufsummiert.

Die DE 101 53 854 C1 zeigt eine Bewegungs- und/oder Positioniereinrichtung zur fünfachsigen Bewegung und/oder Positionierung eines Objektes mit einem Objektträger und fünf Koppelgliedern, welche den Objektträger in einem Gestell abstützen, wobei vier oder fünf Koppelglieder jeweils mittels einer Gelenkanordnung mit jeweils zwei Freiheitsgraden und das entsprechende weitere der fünf Koppelglieder mittels einer zweiten Gelenkanordnung mit einem Freiheitsgrad mit dem Objektträger verbunden sind. Diese Bewegungs- und/oder Postioniervorrichtung weist den Nachteil auf, dass bei ihrer Ausbildung als Bearbeitungsmaschine das Werkstück ausschließlich innerhalb des Gestelles bearbeitet werden kann.

Aufgabe der Erfindung ist es, eine Bewegungs- und/oder Postioniervorrichtung zum elektronisch gesteuerten, mehrachsigen Bewegen und/oder Positionieren eines Objektes mittels eines Objektträgers und Koppelgliedern, die in einem Gestell angeordnet sind, wobei jedes der Koppelglieder über eine Kardanische Aufhängung mit dem Gestell, in der das jeweilige Koppelglied verdrehbar gelagert ist, verbunden ist, und die Koppelglieder gegenüberliegend von der Kardanischen Aufhängung an einem Ende des Objektträgers mittels je einer Gelenkanordnung angelenkt sind, zu entwickeln, mit der es möglich ist, Werkstücke bei hoher Dynamik der Bewegungselemente außerhalb des Gestelles zu bearbeiten.

Erfindungsgemäß wird die Aufgabe dadurch gelöst, dass der Objektträger mittels zweier Koppelglieder mit dem Gestell verbunden ist, und gegenüberliegend von den Gelenkanordnungen, die jeweils zwei Freiheitsgrade aufweisen, der Objektträger über eine Kardanische Aufhängung mit dem Gestell verbunden ist.

Weitere Ausführungsformen der Erfindung zeigen die Unteransprüche 2 bis 15.

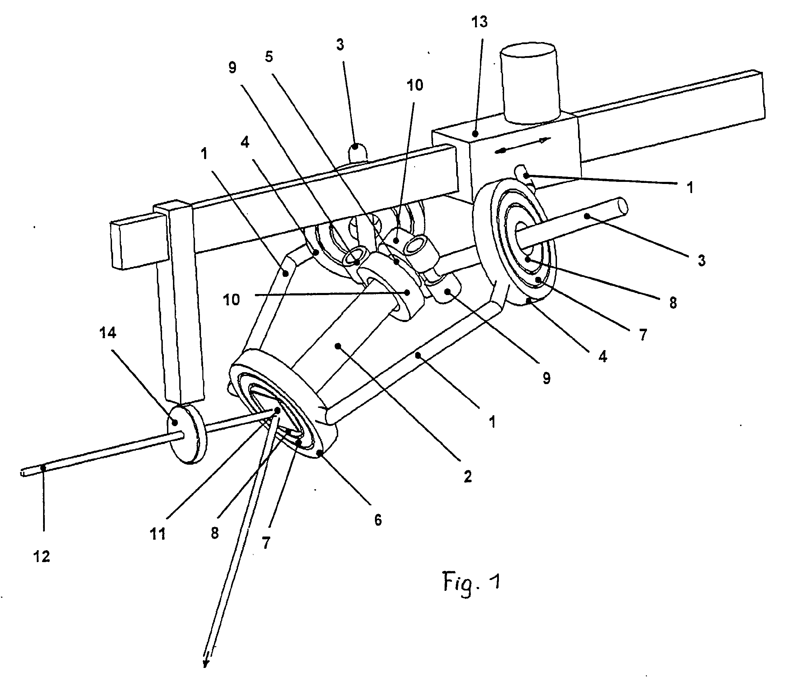

Nachfolgend wird die Erfindung anhand eines Ausführungsbeispieles näher erläutert. Die dazugehörige Zeichnung zeigt eine schematische Darstellung einer Bewegungs- und/oder Postioniervorrichtung zum elektronisch gesteuerten, mehrachsigen Bewegen und/oder Positionieren eines Objektes 11 mittels eines Objektträgers 2. Das Objekt 11 kann unter anderem ein Laser, ein Ablenkspiegel oder ein Lichtleitkabel sein, wobei das Lichtleitkabel an der Vorderseite eines Objektträgers 2 endet. In der Zeichnung führt der Objektträger 2 als Objekt 11 den Ablenkspiegel, der einen Laserstrahl 12 beim Karosserieschweißen in Schweißposition reflektiert, wobei ein Gestell 1 mit einem Läufer 13 fest verbunden ist, der entlang einer oder mehrerer Achsen im Raum, beispielsweise in X- und Y-Achsrichtung, beweglich angeordnet ist. Dazu bündelt eine unabhängig auf der Achse des Läufers 13 verfahrbare Fokussiereinrichtung 14 den Laserstrahl 12 auf eine geforderte Länge. Die Bewegungs- und/oder Postioniervorrichtung besteht aus dem Gestell 1, in dem der Objektträger 2 mittels zweier Koppelglieder 3 angeordnet ist, wobei die Koppelglieder 3 mit dem Gestell 1 über je eine Kardanische Aufhängung 4, in der das jeweilige Koppelglied 3 verdrehbar gelagert ist, verbunden sind. Gegenüberliegend von der Kardanischen Aufhängung 4 sind die Koppelglieder 3 an einem der Enden des Objektträgers 2 mittels je einer Gelenkanordnung 5 angelenkt. Das gegenüberliegende Ende des Objektträgers 2 ist im Gestell 1 mit einer Kardansichen Aufhängung 6 verbunden. Die Kardanische Aufhängung 6 des Objektträgers 2 am Gestell 1 weist zwei Freiheitsgrade auf und besteht aus zwei ringförmigen Elementen, wobei ein äußerer Ring 7 einen inneren Ring 8 aufnimmt. Der innere Ring 8 ist im äußeren Ring 7 drehbeweglich um eine Achse des inneren Ringes 8 gelagert. Der äußere Ring 7 ist im Gestell 1 drehbeweglich um eine Achse des äußeren Ringes 7 gelagert. Der Objektträger 2 ist im inneren Ring 8 befestigt und kann außen an der Stirnseite das Objekt 11 aufnehmen. Die Gelenkanordnung 5 jedes Koppelgliedes 3 verfügt über zwei Freiheitsgrade. Sie besteht aus einem Scharnier 9, dass das jeweilige Koppelglied 3 an einem Gelenkring 10 anlenkt, der um die Längsachse des Objektträgers 2 drehbeweglich angeordnet ist. Die Kardanische Aufhängung 4 der Koppelglieder 3 im Gestell 1 ist technisch so ausgebildet, wie die Kardanische Aufhängung 6 des Objektträgers 2 im Gestell 1, wobei das Koppelglied 3 im inneren Ring 8 verdrehbar aufgenommen ist.

In einer Ausführung der Erfindung ist der Abstand zwischen Scharnier 9 und Mittelpunkt der Kardanischen Aufhängung 4 je Koppelglied 3 änderbar. Beispielsweise können die Koppelglieder 3 als Gewindespindeln ausgebildet sein, wobei die Gewindespindeln in den einzelnen Kardanischen Aufhängungen 4 jeweils in einer nicht dargestellten Mutter, drehbeweglich aufgenommen sind. Dazu werden die Muttern mittels einer Antriebseinrichtung drehend bezüglich der Längsachse der Gewindespindel bewegt. Alternativ zur Ausbildung der Koppelglieder 3 als Gewindespindeln können zwischen den Kardanischen Aufhängungen 4 und den Scharnieren 9 Hubzylinder angeordnet werden, die funktionell als Koppelglieder 3 dienen und die Länge der Koppelglieder 3 selbst ändern. In einer weiteren Ausführung der Erfindung ist zwischen den Kardanischen Aufhängungen 4 und den Scharnieren 9 je ein Linearantrieb mit innerem Freiheitsgrad Drehung um die eigene Achse angeordnet. Der Linearantrieb ist als Koppelglied 3 ausgebildet und ändert die Länge der Koppelglieder 3. Die elektronische Steuerung zum mehrachsigen Bewegen und/oder Positionieren des Objektes 11 ist eine programmierte Steuereinheit in Form einer NC-Steuereinheit für vier Programmierachsen, wobei die NC-Steuereinheit einen Programmierbaustein zur Erzeugung der koordinierten Bewegung aller Achsen der Bewegungs- und/oder Positioniervorrichtung aus Folgen von Raumkoordinaten aufweist.

### Bezugszeichen

- 1: Gestell
- 2: Objektträger
- 3: Koppelglieder
- 4: Aufhängung- Koppelglieder
- 5: Gelenkanordnungen
- 6: Aufhängung - Objektträger
- 7: Ring, außen
- 8: Ring, innen
- 9: Scharniere
- 10: Gelenkringe
- 11: Objekt
- 12: Laserstrahl
- 13: Läufer
- 14: Fokussiereinrichtung

## Patentansprüche

1. Bewegungs- und/oder Positioniervorrichtung zum elektronisch gesteuerten, mehrachsigen Bewegen und/oder Positionieren eines Objektes mittels eines Objektträgers (2) und Koppelgliedern (3), die in einem Gestell (1) angeordnet sind, wobei jedes der Koppelglieder über eine Kardanische Aufhängung (4) mit dem Gestell, in der das jeweilige Koppelglied verdrehbar gelagert ist, verbunden ist, und die Koppelglieder gegenüberliegend von der Kardanischen Aufhängung an einem Ende des Objektträgers mittels je einer Gelenkanordnung (5) angelenkt sind, **dadurch gekennzeichnet, dass** der Objektträger (2) mittels zweier Koppelglieder (3) mit dem Gestell (1) verbunden ist, und gegenüberliegend von den Gelenkanordnungen (5), die jeweils zwei Freiheitsgrade aufweisen, der Objektträger (2) über eine Kardanische Aufhängung (6) mit dem Gestell (1) verbunden ist.

2. Bewegungs- und/oder Positioniervorrichtung nach Anspruch 1, **dadurch gekennzeichnet, dass** die Kardanische Aufhängung (6) des Objektträgers (2) am Gestell (1) aus zwei ringförmigen Elementen besteht, wobei ein äußerer Ring (7) einen inneren Ring (8) aufnimmt, der innere Ring (8) im äußeren Ring (7) drehbeweglich um eine Achse eines inneren Ringes (8) gelagert ist, und der äußere Ring (7) im Gestell (1) drehbeweglich um eine Achse des äußeren Ringes (7) gelagert ist, sowie der Objektträger (2) im inneren Ring (8) befestigt angeordnet ist.

3. Bewegungs- und/oder Positioniervorrichtung nach Anspruch 1, **dadurch gekennzeichnet, dass** die Gelenkanordnung (5) jedes Koppelgliedes (3) aus je einem Scharnier (9) besteht, welches das jeweilige Koppelglied (3) an einem Gelenkring (10) anlenkt, der um die Längsachse des Objektträgers (2) drehbeweglich angeordnet ist.

4. Bewegungs- und/oder Positioniervorrichtung nach Anspruch 1, **dadurch gekennzeichnet, dass** das Objekt (11) ein Ablenkspiegel (16) ist, der auf dem Ende des im Gestell (1) kardanisch angelenkten Objektträgers (2) fest anordenbar ist.

5. Bewegungs- und/oder Positioniervorrichtung nach Anspruch 1, **dadurch gekennzeichnet, dass** das Objekt (11) ein Lichtleitkabel ist, das durch den Objektträger (2) geführt ist.

6. Bewegungs- und/oder Positioniervorrichtung nach Anspruch 1, **dadurch gekennzeichnet, dass** das Objekt (11) eine Strahlenquelle ist, die auf dem Ende des im Gestell (1) kardanisch angelenkten Objektträgers (2) fest anordenbar ist.

7. Bewegungs- und/oder Positioniervorrichtung nach Anspruch 1 und 6, **dadurch gekennzeichnet, dass** die Strahlenquelle ein Laser ist.

8. Bewegungs- und/oder Positioniervorrichtung nach Anspruch 1 und 3, **dadurch gekennzeichnet, dass** der Abstand zwischen Scharnier (9) und Mittelpunkt der Kardanischen Aufhängung je Koppelglied (3) änderbar ist.

9. Bewegungs- und/oder Positioniervorrichtung nach Anspruch 1, **dadurch gekennzeichnet, dass** die Länge der Koppelglieder (3) selbst änderbar ist.

10. Bewegungs- und/oder Positioniervorrichtung nach Anspruch 1 und 8, **dadurch gekennzeichnet, dass** die Koppelglieder (3) als Gewindespindeln ausgebildet sind, wobei die Gewindespindeln in den einzelnen Kardanischen Aufhängungen (4) jeweils in einer Haltvorrichtung mit Innengewinde, insbesondere in einer Mutter, drehbeweglich aufgenommen sind, wobei eine Mutter bezüglich einer Längsachse der Gewindespindeln mittels einer Antriebseinrichtung drehbar ist.

11. Bewegungs- und/oder Positioniervorrichtung nach Anspruch 1, und 9, **dadurch gekennzeichnet, dass** zwischen den einzelnen Kardanischen Aufhängungen (4) und den Koppelgliedern (3) je ein Linearantrieb mit innerem Freiheitsgrad Drehung um die eigenen Achse angeordnet ist.

12. Bewegungs- und/oder Positioniervorrichtung nach Anspruch 1, **dadurch gekennzeichnet, dass** das Gestell (1) mit einem Läufer (13) fest verbunden ist, der entlang einer oder mehrere Achsen im Raum beweglich angeordnet ist.

13. Bewegungs- und/oder Positioniervorrichtung nach Anspruch 1, 7 und 12, **dadurch gekennzeichnet, dass** eine unabhängig auf der Achse des Läufers (13) verfahrbare angeordnete Fokussiereinheit (14) den Strahl des Lasers auf eine geforderte Länge bündelt.

14. Bewegungs- und/oder Positioniervorrichtung nach Anspruch 1, **dadurch gekennzeichnet, dass** eine programmierbare Steuereinheit ein kombiniertes Bewegen und/oder Positionieren des Objektträgers realisiert.

15. Bewegungs- und/oder Positioniervorrichtung nach Anspruch 1 und 14, **dadurch gekennzeichnet, dass** die programmierbare Steuereinheit eine NC-Steuereinheit ist, die einen Programmbaustein zur Erzeugung der koordinierten Bewegung aller Achsen der Schwenk- und/oder Postioniervorrichtung aus Folgen von zwei oder drei Raumkoordinaten enthält.

## Claims

1. Moving and/or positioning device for electronically controlled multi-axial movement and/or positioning of an object by means of an object carrier (2) and coupling elements (3) arranged in a frame (1), whereby each of the coupling elements is connected with the frame through a cardanic suspension (4) in which the coupling element concerned is pivoted, and the coupling elements opposite the cardanic suspension are articulated at one end of the object carrier by means of one articulated arrangement (5) each,
**characterized in that** the object carrier (2) is connected with the frame (1) by two coupling elements (3), and opposite the articulated arrangements (5), both featuring two degrees of freedom, the object carrier (2) is connected with the frame (1) through a cardanic suspension (6).

2. Moving and/or positioning device in accordance with Claim 1
**characterized in that** the cardanic suspension (6) of the object carrier (2) at the frame (1) consists of two ring-type elements, whereby an outer ring (7) takes up an inner ring (8), the inner ring (8) is pivoted in the outer ring (7) around an axis of the inner ring (8), and the outer ring (7) is pivoted in the frame (1) around an axis of the outer ring (7) and the object carrier (2) is fixed in the inner ring (8).

3. Moving and/or positioning device in accordance with Claim 1 **characterized in that** the articulated arrangement (5) of each coupling element (3) consists of one hinge (9) each, articulating the relevant coupling element (3) at an articulated ring (10) arranged to freely rotate around the longitudinal axis of the object carrier (2).

4. Moving and/or positioning device in accordance with Claim 1 **characterized in that** the object (11) is a deflection mirror (16) that can be firmly located at the end of the cardanically articulated object carrier (2) in the frame (1).

5. Moving and/or positioning device in accordance with Claim 1 **characterized in that** the object (11) is a fibre optic cable routed through the object carrier (2).

6. Moving and/or positioning device in accordance with Claim 1 **characterized in that** the object (11) is a radiation source that can be firmly located at the end of the object carrier (2), cardanically articulated in the frame (1).

7. Moving and/or positioning device in accordance with Claims 1 and 6 **characterized in that** the radiation source is a laser.

8. Moving and/or positioning device in accordance with Claims 1 and 3 **characterized in that** the distance between the hinge (9) and the midpoint of the cardanic suspension is changeable for each coupling element (3).

9. Moving and/or positioning device in accordance with Claim 1 **characterized in that** the length of the coupling elements (3) themselves are changeable.

10. Moving and/or positioning device in accordance with Claims 1 and 8 **characterized in that** the coupling elements (3) are designed as threaded spindles, whereby the threaded spindles in the individual cardanic suspensions (4) are held free to rotate in a holding device with internal thread, in particular in a nut, whereby a nut in relation to a longitudinal axis of the threaded spindles is rotatable by a drive unit.

11. Moving and/or positioning device in accordance with Claims 1 and 9 **characterized in that** between the individual cardanic suspensions (4) and the coupling elements (3), one linear drive each with an internal degree of freedom of rotation around its own axis is arranged.

12. Moving and/or positioning device in accordance with Claim 1 **characterized in that** the frame (1) is firmly connected with a rotor (13) that is movably arranged in the space along one or several axes.

13. Moving and/or positioning device in accordance with Claims 1, 7 and 12 **characterized in that** a focussing unit (14), travelling independently along the axis of the rotor (13), bundles the laser beam to a length required.

14. Moving and/or positioning device in accordance with Claim 1 **characterized in that** a programmable control unit implements a combined moving and/or positioning of the object carrier.

15. Moving and/positioning device in accordance with Claims 1 and 14 **characterized in that** the programmable control unit is an NC control unit containing a programme module to generate the coordinated movement of all axes of the pivoting and/or positioning device from sequences of two or three space coordinates.

## Revendications

1. Dispositif de déplacement et/ou de positionnement à suspension à cardan et à commande électronique pour le déplacement multiaxes et/ou le positionnement d'un objet moyennant un support d'objets (2) et des éléments de couplage (3) qui, eux, sont disposés dans un bâti (1) où chaque élément de couplage est monté sur palier tournant, le raccordement au bâti étant assuré par une suspension à cardan (4), et où chaque élément de couplage situé en face de la suspension à cardan est articulé, au moyen d'un joint d'articulation (5) y disposé, sur l'un des deux bouts du support d'objet, **caractérisé en ce que** le support d'objets (2) est relié par deux éléments de couplage (3) au bâti (1), et qu'en face des dispositions de joints d'articulation (5) dont chacune présente deux degrés de liberté, le raccord entre le support d'objets (2) et le bâti (1) est réalisé par une suspension à cardan (6).

2. Dispositif de déplacement et/ou de positionnement conforme à la revendication 1, **caractérisé en ce que** la suspension à cardan (6) du support d'objets (2) montée sur le bâti (1) consiste en deux éléments annulaires dont l'anneau intérieur (8) étant logé dans l'anneau extérieur (7) est monté sur palier tournant autour d'un axe d'un anneau intérieur (8), que l'anneau extérieur (7) est logé dans le bâti (1) où il est monté sur palier tournant autour d'un axe de l'anneau extérieur (7), et que le support d'objets (2) est fixé dans l' anneau intérieur (8).

3. Dispositif de déplacement et/ou de positionnement conforme à la revendication 1, **caractérisé en ce que** la disposition de joints d'articulation (5) de chaque élément de couplage (3) consiste en une charnière (9) qui assure l'articulation de l'élément de couplage (3) respectif sur un anneau articulé (10) qui, lui, est placé sur palier tournant autour de l'axe longitudinal du support d'objets (2).

4. Dispositif de déplacement et/ou de positionnement conforme à la revendication 1, **caractérisé en ce que** l'objet (11) est un miroir déflecteur (16) qui peut être fixé de façon stationnaire sur le bout du support d'objets (2) articulé par une suspension à cardan dans le bâti (1).

5. Dispositif de déplacement et/ou de positionnement conforme à la revendication 1, **caractérisé en ce que** l'objet (11) est un câble à filtres optiques qui est passé par le support d'objets (2).

6. Dispositif de déplacement et/ou de positionnement conforme à la revendication 1, **caractérisé en ce que** l'objet (11) est une source de rayonnement qui peut être fixée de façon stationnaire sur le bout du support d'objets (2) articulé par une suspension à cardan dans le bâti (1).

7. Dispositif de déplacement et/ou de positionnement conforme aux revendications 1 et 6, **caractérisé en ce que** la source de rayonnement est un laser.

8. Dispositif de déplacement et/ou de positionnement conforme aux revendications 1 et 3, **caractérisé en ce que** l'écart entre la charnière (9) et le point central de la suspension à cardan de chaque élément de couplage (3) peut être modifié.

9. Dispositif de déplacement et/ou de positionnement conforme à la revendication 1, **caractérisé en ce que** la longueur même des éléments de couplage (3) peut être modifiée.

10. Dispositif de déplacement et/ou de positionnement conforme aux revendications 1 et 8, **caractérisé en ce que** les éléments de couplage (3) consistent en broches filetées, celles-ci étant montées sur palier tournant dans les différentes suspensions à cardan (4) et fixées moyennant un dispositif de serrage à filetage intérieur, notamment à l'aide d'un écrou, et **en ce que**, grâce à un mécanisme d'entraînement, l'un de ces écrous peut tourner sur l'axe longitudinal des broches filetées.

11. Dispositif de déplacement et/ou de positionnement conforme aux revendications 1 et 9, **caractérisé en ce qu'**un entraînement linéaire à degré de liberté intérieur permettant la rotation autour de son propre axe est placé entre les différentes suspensions à cardan (4) et chacun des éléments de couplage (3).

12. Dispositif de déplacement et/ou de positionnement conforme à la revendication 1, **caractérisé en ce que** le bâti (1) est raccordé de façon fixe à un rotor (13) qui, lui, est mobile le long d'un ou de plusieurs axes de l'espace concerné.

13. Dispositif de déplacement et/ou de positionnement conforme aux revendications 1, 7 et 12, **caractérisé en ce qu'**une unité de focalisation (14) déplaçable de manière autonome sur l'axe du rotor (13) focalise le rayon laser jusqu'à ce celui ait une longueur spécifiée.

14. Dispositif de déplacement et/ou de positionnement conforme à la revendication 1, **caractérisé en ce qu'**une unité de commande programmable effectue un déplacement combiné et/ou un positionnement du support d'objets.

15. Dispositif de déplacement et/ou de positionnement conforme aux revendications 1 et 14, **caractérisé en ce que** l'unité de commande programmable est une commande numérique qui, elle, comprend un module de programme permettant le déplacement coordonné, grâce aux séquences de deux ou trois coordonnées spatiales, de tous les axes du dispositif de pivotement et/ou de positionnement.
